# DEMANDE DE BREVET EUROPEEN

(11) **EP 2 424 315 A1**
(43) Date de publication de la demande: **29.02.2012**
(21) Numéro de dépôt: 10305927.5
(22) Date de dépôt: 30.08.2010
(51) Int. Cl.: H04W 60/02, H04W 8/00

(54) **Procédé de mise à jour d'une base de données d'abonnés enregistrés dans une plateforme OTA, carte et plateforme OTA correspondantes**

(71) Demandeur: Gemalto SA, 92190 Meudon (FR)
(72) Inventeur: Amiel, Patrice, 13290, AIX-LES-MILLES (FR); Paillart, Frédéric, 13090, AIX EN PROVENCE (FR)

(57) **Abrégé**

L'invention concerne notamment un procédé de mise à jour d'une base de données 30 d'abonnés enregistrés dans une plateforme OTA 12 reliée à un réseau de télécommunications, à chaque abonné étant associé un identifiant,

Selon l'invention, le procédé consiste à :
i- transmettre de temps en temps, depuis chaque terminal d'abonné à la plateforme OTA 12, un message comprenant l'identifiant d'abonné correspondant ;
ii- classer dans un premier répertoire 40 de la base de données 30 les identifiants d'abonnés ayant transmis au moins une fois à la plateforme OTA 12 le message depuis une première durée prédéterminée ;
iii- classer dans un second répertoire 41 de la base de données 30 les identifiants d'abonnés n'ayant pas transmis à la plateforme OTA 12 le message depuis cette première durée prédéterminée ;
iv- n'envoyer, à partir de la plateforme OTA 12, des messages qu'aux abonnés classés dans le premier répertoire 40.

## Description

Le domaine de l'invention est celui des télécommunications et concerne plus précisément un procédé de mise à jour d'une base de données d'abonnés enregistrés dans une plateforme OTA (Over The Air en anglais).

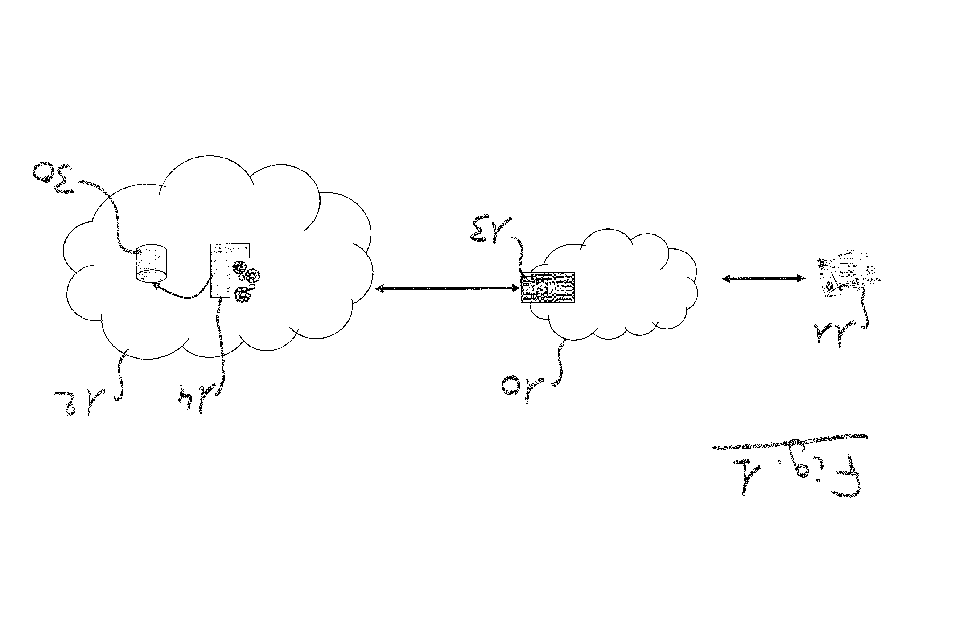

Une plateforme OTA est, de manière connue, une entité reliée à un réseau de télécommunications sans fil, tel qu'un réseau GSM, CDMA, 3G ou LTE. La figure 1 représente schématiquement un système comprenant un tel réseau auquel est connectée une plateforme OTA.

Un réseau de télécommunications 10, par exemple un réseau 3G, assure des télécommunications pour des abonnés à ce réseau. Chaque abonné communique avec le réseau 10 grâce à un terminal non représenté, par exemple un téléphone portable, dans lequel est insérée une carte 11, constituée par une carte UICC dans un réseau 3G ou par une carte SIM dans un réseau GSM. La carte 11 comporte un identifiant de l'abonné au réseau 10 permettant à cet abonné de s'authentifier auprès du réseau 10 pour accéder à des services.

Une plateforme OTA 12 est connectée au réseau 10. La plateforme 12 est localisée chez l'opérateur du réseau 10 ou alors chez un administrateur, tel qu'un fabricant de cartes 11. La fonction principale de l'administrateur est de procéder de temps en temps à des campagnes d'administration des cartes 11 de l'opérateur du réseau 10. Ces campagnes d'administration consistent à transmettre, à un ensemble ou à toutes les cartes 11, des messages contenant des jeux d'instruction modifiant le fonctionnement ou le contenu des cartes 11. Les jeux d'instruction forment des programmes qui sont donc téléchargés via OTA dans les cartes 11. Il est ainsi possible d'administrer les cartes 11 à distance.

L'administrateur peut également envoyer des messages publicitaires aux cartes 11 de l'opérateur. Cette technique est appelée le « push » publicitaire.

Dans tous les cas, afin de pouvoir s'adresser aux cartes 11, la plateforme OTA 12 contient les identifiants de tous les abonnés de l'opérateur du réseau 10. Ces identifiants sont classiquement les ICC-ID (numéros de série des cartes) ou les MSISDN (numéros de téléphone des cartes). Les messages sont transmis de la plateforme 12 vers les cartes 11 via le réseau 10 de l'opérateur, soit sous la forme de SMS, soit via IP (dans le cas d'un réseau 3G ou LTE 3). La plateforme 12 stocke les identifiants et les données dans une base de données 30 et comporte des moyens de traitement 14.

Au niveau de la plateforme OTA 12, ou plus précisément au niveau de la base de données 30, de nombreuses données peuvent être associées à chaque identifiant d'abonné. Ces données sont par exemple les clés OTA 03.48 utilisées pour s'adresser à l'abonné correspondant, le profil de l'utilisateur, l'historique des messages qui ont été transmis à l'abonné, les numéros de téléphone de l'agenda de l'abonné,... La plateforme 12 stocke ces données pour chaque abonné de l'opérateur, ce qui représente une quantité énorme d'informations à stocker, le nombre d'abonnés d'un opérateur pouvant atteindre plusieurs millions, voire plusieurs dizaines de millions.

Il est à signaler que le réseau 10 peut également être un réseau IP et la carte 11 communique alors avec ce réseau IP via Internet (OTI).

Un des principaux problèmes rencontré lors de campagnes d'administration de cartes, et essentiellement lors de campagnes massives où plusieurs millions de cartes d'abonné sont adressées, est que toutes les cartes adressées ne sont plus actives. Ces cartes inactives sont par exemple des cartes qui ont été perdues, qui ont été cassées, ou dont l'abonné a changé d'opérateur. Un changement d'opérateur est notamment facilité par la portabilité du numéro : l'abonné conserve son numéro de téléphone tout en changeant d'opérateur. La plateforme OTA essaie donc de s'adresser à une carte qui n'est plus gérée par l'opérateur du réseau à laquelle cette plateforme est rattachée. Cet adressage se solde nécessairement par un échec. Lors de campagnes d'administration de cartes, on observe communément un taux d'échec de 20%, c'est-à-dire qu'une carte sur cinq enregistrée au niveau de la base de données 30 est en réalité inactive (cassée, perdue ou l'abonné a changé d'opérateur). Ce chiffre est valable pour des systèmes récents. Si l'on prend en compte qu'un utilisateur change de carte environ tous les trois ans, cela signifie qu'au bout de trois ans, 50% des cartes enregistrées au niveau d'une plateforme OTA ne sont plus actives. Les cartes prépayées qui ne sont plus actives du fait d'un dépassement de leur durée de validité présentent le même problème d'adressage, de même que les cartes prépayées ayant été perdues ou endommagées.

La détection de cartes actives pourrait être réalisée sur la base de réception de messages de bonne réception (« Acknowledgement » en anglais) émis par les cartes après une campagne OTA mais le problème est que les messages des campagnes OTA (émis par la plateforme) ont une durée limitée (par exemple à un jour, stockés dans les SMSC des réseaux). Ainsi, la carte d'un abonné qui a éteint son téléphone pendant deux jours ou plus, ne recevra par le message OTA et ne renverra pas de message de bonne réception. Cela ne signifie pas pour autant que la carte de cet abonné est perdue, abîmée ou qu'il a changé d'opérateur.

L'adressage de cartes inactives entraîne une surcharge inutile et importante du réseau et pénalise d'autres services qui auraient pu être assurés pendant ce temps. Un autre problème est que lorsqu'une carte n'a pas pu être adressée lors d'une campagne, la plateforme tentera ultérieurement de s'adresser à nouveau à elle (croyant que le terminal dans lequel elle était insérée était éteint) une ou plusieurs fois, ce qui génèrera encore du trafic inutile sur le réseau.

Une solution possible pour remédier à ce problème serait d'établir un lien entre le HLR (Home Location Register) du réseau et la plateforme OTA. Le HLR contient les identifiants des abonnés au réseau. Cependant, un tel lien n'existe pas dans les réseaux actuels et les identifiants mémorisés dans le HLR ne sont pas tenus à jour par l'opérateur. Une plateforme OTA 12 est en effet uniquement reliée au SMSC 13 du réseau 10 et non pas au HLR de ce réseau 10.

La problématique est donc qu'il n'existe pas de moyen permettant à la plateforme OTA de ne s'adresser qu'aux cartes actives lors de campagnes d'administration, c'est-à-dire qu'aux cartes qui sont effectivement encore utilisées par leur détenteur dans le réseau de l'opérateur auquel est rattachée cette plateforme OTA.

Un problème qui en découle est que la plateforme OTA stocke et effectue des traitements (par les moyens 14) des données relatives à des abonnés qui ne peuvent plus être joints, soit parce qu'ils ne sont plus abonnés à l'opérateur auquel est rattachée la plateforme OTA, soit parce que leur carte est perdue ou non fonctionnelle.

La présente invention a notamment pour objectif de pallier à ces inconvénients.

Plus précisément, un des objectifs de l'invention est de fournir un procédé permettant de mettre à jour une base de données d'abonnés enregistrés dans une plateforme OTA reliée à un réseau de télécommunications, à chaque abonné étant associé un identifiant, afin que la plateforme OTA soit en mesure de n'adresser, pour des campagnes ou des envois de publicités, que les abonnés qui sont réellement encore actifs dans le réseau, c'est-à-dire dont les cartes ne sont pas invalides ou perdues.

Un autre objectif de l'invention est de limiter le stockage et le traitement des données dans la plateforme OTA à ces abonnés actifs.

Ces objectifs, ainsi que d'autres qui apparaîtront par la suite, sont atteints grâce à un procédé de mise à jour d'une base de données d'abonnés enregistrés dans une plateforme OTA reliée à un réseau de télécommunications, à chaque abonné étant associé un identifiant, le procédé consistant à :
i- transmettre de temps en temps, depuis chaque terminal d'abonné à la plateforme OTA, un message comprenant l'identifiant d'abonné correspondant ;
ii- classer dans un premier répertoire de la base de données les identifiants d'abonnés ayant transmis au moins une fois à la plateforme OTA le message depuis une première durée prédéterminée ;
iii- classer dans un second répertoire de la base de données les identifiants d'abonnés n'ayant pas transmis à la plateforme OTA le message depuis la première durée prédéterminée ;
iv- n'envoyer, à partir de la plateforme OTA, des messages qu'aux abonnés classés dans le premier répertoire.

L'invention consiste donc à établir une liste d'abonnés qui ne se sont pas manifestés par l'envoi d'un message depuis une certaine période de temps, ces abonnés étant considérés par la plateforme OTA comme étant inactifs. La plateforme n'envoie plus de messages à ces abonnés inactifs, ce qui permet de limiter le trafic lors des campagnes.

Dans un mode de mise en oeuvre avantageux, les messages sont constitués par des mises à jour de programmes résidant dans les terminaux d'abonnés.

Dans un autre mode de mise en oeuvre, les messages sont constitués par des publicités.

Selon un mode de mise en oeuvre préférentiel, les messages comprenant les identifiants sont transmis à la plateforme à la demande de la plateforme.

Selon un autre mode de mise en oeuvre, les messages comprenant les identifiants sont transmis à la plateforme à l'initiative des terminaux.

Avantageusement, au moins un des terminaux d'abonné renferme une carte de type UICC et les messages transmis par la plateforme sont envoyés à la carte de type UICC.

L'invention concerne également une carte de type UICC, cette carte contenant un programme générant périodiquement la transmission à une plateforme OTA d'un message comprenant un identifiant de la carte UICC.

Préférentiellement, le programme génère la transmission du message comprenant l'identifiant de la carte UICC lors de la mise sous tension de la carte UICC si le programme détecte qu'une durée supérieure à une troisième durée prédéterminée s'est écoulée entre la dernière transmission du message comprenant l'identifiant et la mise sous tension, la troisième durée prédéterminée étant inférieure à la première durée prédéterminée.

L'invention concerne également une carte de type UICC, cette carte contenant un programme générant la transmission à une plateforme OTA d'un message comprenant un identifiant de la carte UICC, la transmission étant réalisée à réception d'un message d'interrogation émis par la plateforme OTA.

Enfin, l'invention concerne une plateforme OTA comprenant des moyens de stockage de données d'abonnés à un réseau de télécommunications, à chaque abonné étant associé un identifiant, la plateforme comprenant des moyens pour empêcher la transmission de messages à des terminaux d'abonnés qui n'ont pas transmis leur identifiant à la plateforme OTA depuis une première durée prédéterminée.

Avantageusement, cette plateforme OTA comprend des moyens pour supprimer les données des abonnés qui n'ont pas transmis un message comprenant leur identifiant à la plateforme OTA depuis une seconde durée prédéterminée, la seconde durée prédéterminée étant supérieure ou égale à la première durée prédéterminée.

D'autres caractéristiques et avantages de la présente invention apparaîtront plus clairement à la lecture de la description suivante d'un mode de mise en oeuvre préférentiel, donné à titre illustratif et non limitatif, et des dessins annexés dans lesquels :
- la figure 1 représente schématiquement un système comprenant un réseau auquel est connectée une plateforme OTA ;
- la figure 2 représente trois durées permettant de déterminer si des messages doivent être transmis ou non à un abonné et si des données relatives à cet abonné doivent être conservées ou non au niveau de la plateforme OTA.
- la figure 3 représente schématiquement le procédé mis en oeuvre dans un système selon la figure 1.

La figure 1 a été décrite en référence à l'état de la technique.

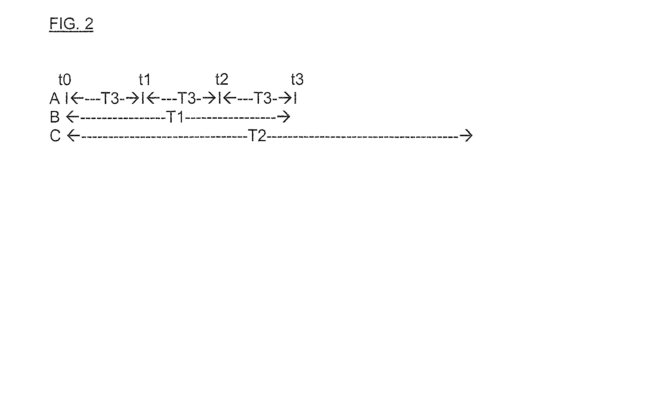

La figure 2 représente trois durées permettant de déterminer si des messages doivent être transmis ou non à un abonné et si des données relatives à cet abonné doivent être conservées ou non au niveau de la plateforme OTA.

Comme indiqué en référence à l'état de la technique, la plateforme OTA comporte une base de données d'abonnés 30, à chaque abonné étant associé un identifiant. L'invention propose de transmettre de temps en temps, par exemple selon une période T3, depuis chaque terminal d'abonné à la plateforme OTA, un message comprenant l'identifiant d'abonné correspondant.

Ainsi, un abonné actif transmet à un temps t1 son identifiant à la plateforme OTA, une durée T3 s'étant écoulée depuis une référence temporelle t0. Cet abonné signale ainsi à la plateforme OTA qu'il est bien en activité et que sa carte est opérationnelle dans le réseau de l'opérateur.

A la réception de cet identifiant, la plateforme considère que l'abonné correspondant est actif et classe l'identifiant dans un premier répertoire. Ce premier répertoire peut être considéré comme étant le répertoire des abonnés actifs.

Aux instants t2 et t3, cet abonné renvoie son identifiant à la plateforme OTA. Le cas A correspond à cet abonné actif ayant envoyé trois fois son identifiant à la plateforme.

La période T3 est par exemple de deux mois.

Le cas B est celui d'un abonné qui a par exemple changé d'opérateur. De ce fait, il ne peut plus communiquer avec la plateforme OTA et celle-ci ne reçoit plus son identifiant aux temps t1 à t3. La plateforme OTA n'ayant pas reçu depuis une première durée prédéterminée T1 de message de cet abonné, elle classe son identifiant dans un second répertoire de sa base de données. Ce second répertoire peut être considéré comme étant le répertoire des abonnés inactifs.

Selon l'invention, la plateforme OTA n'envoie de message qu'aux abonnés classés dans le premier répertoire, c'est-à-dire uniquement aux abonnés ayant transmis au moins une fois leur identifiant depuis la première durée prédéterminée T1.

L'invention consiste donc à établir une liste d'abonnés qui ne se sont pas manifestés par l'envoi d'un message comprenant leur identifiant depuis une certaine période de temps, ces abonnés étant alors considérés par la plateforme OTA comme étant inactifs. La plateforme n'envoie plus de messages à ces abonnés inactifs, ce qui permet de limiter le trafic lors des campagnes.

Les messages envoyés par la plateforme peuvent être constitués par des mises à jour de programmes résidant dans les terminaux d'abonnés ou par des publicités.

Préférentiellement, les messages comprenant les identifiants sont transmis à la plateforme à l'initiative des terminaux. Les terminaux comprennent à cet effet un programme qui peut leur être envoyé via OTA pour qu'ils signalent leur activité, par exemple périodiquement. Ce programme est typiquement stocké dans la carte UICC. Il est cependant également possible de stocker le programme dans le terminal lui-même. La carte UICC peut être remplacée par tout autre élément, par exemple par un dongle (dans ce cas, on est dans un réseau OTI où le réseau mobile 10 est remplacé par un réseau internet), un USIM, ou être intégrée au terminal (et de ce fait le terminal renferme de manière fixe un élément sécurisé).

L'invention concerne donc également une carte de type UICC, cette carte contenant un programme générant périodiquement (T3) la transmission à une plateforme OTA d'un message comprenant un identifiant de la carte UICC. Cet identifiant est par exemple le MSISDN ou le ICC-ID.

Lorsqu'un abonné éteint son terminal d'abonné, ce dernier ne peut plus transmettre de message à la plateforme OTA. La carte UICC stocke la date de la dernière transmission du message contenant son identifiant à la plateforme OTA. A la mise sous tension du terminal mobile, si le programme détecte qu'une durée supérieure à T3 s'est écoulée entre la dernière transmission du message contenant son identifiant et cette mise sous tension, le programme génère la transmission immédiate du message contenant l'identifiant à la plateforme. La date courante est indiquée à la carte soit par le réseau, soit par le terminal.

Dans un autre mode de mise en oeuvre, les messages comprenant les identifiants sont transmis à la plateforme à la demande de cette plateforme. Ceci entraîne cependant du trafic supplémentaire de la plateforme OTA vers les terminaux d'abonnés et c'est pourquoi la solution évoquée ci-dessus (transmission automatique à l'initiative des terminaux) sera préférée. L'invention concerne donc également une carte de type UICC, cette carte contenant un programme générant la transmission à une plateforme OTA d'un message comprenant un identifiant de la carte UICC, la transmission étant réalisée à réception d'un message d'interrogation émis par la plateforme OTA.

Une plateforme OTA selon l'invention comprend des moyens pour empêcher la transmission de messages à des terminaux d'abonnés qui n'ont pas transmis leur identifiant à la plateforme OTA depuis la première durée prédéterminée T1.

Avantageusement, comme illustré par le cas C de la figure 2, la plateforme OTA comprend des moyens pour supprimer les données des abonnés qui n'ont pas transmis un message à la plateforme OTA depuis une seconde durée prédéterminée T2. La durée T2 peut être supérieure ou égale à la durée T1. En cas d'égalité, la non-transmission de messages aux abonnés concernés coïncide avec la suppression des données enregistrées au niveau de la plateforme.

La périodicité d'émission T3 peut être modulée en fonction du temps, par exemple lors d'une campagne.

L'invention permet donc à une plateforme OTA d'une part de ne plus adresser des cartes considérées comme inactives et d'autre part de ne pas stocker indéfiniment des informations liées à des cartes considérées comme inactives.

Si un abonné éteint son terminal pendant une durée supérieure à T2 et le rallume, la plateforme réintégrera dans sa base de données l'identifiant associé lors de la mise sous tension du terminal. Elle va ainsi provisionner automatiquement l'identifiant, la carte transmettant son profil, n° de lot, etc. Les clés OTA sont recalculées par la plateforme.

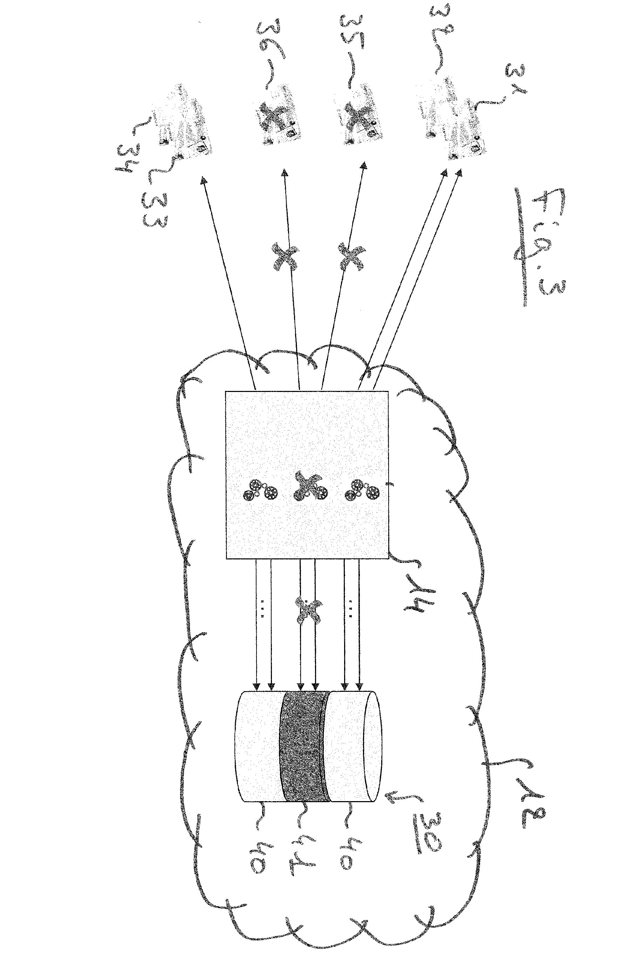

La figure 3 représente schématiquement le procédé mis en oeuvre dans un système selon la figure 1.

La plateforme OTA 12 accède à sa base de données 30 pour connaître quelles cartes sont considérées comme actives. Les identifiants des cartes 31 à 34 étant compris dans un premier répertoire 40, celles-ci sont adressées par la plateforme 12 qui lui envoie des messages. En revanche, les identifiants des cartes 35 et 36 étant présents dans un second répertoire 41, la plateforme 12 ne leur transmet pas de message, car celles-ci ne se sont pas manifestées par l'envoi de leur identifiant depuis la durée T1. De même, il n'existe plus de traitement des données relatives à ces cartes 35, 36 au niveau des moyens de traitement 14.

L'invention permet également d'apporter une souplesse à la gestion des cartes d'abonnés : il est par exemple possible de ne plus envoyer, dans une première phase, de publicités à des cartes, dans une deuxième phase ultérieure de ne plus effectuer de mise à jour lors de campagnes OTA et, dans une troisième phase ultérieure, de supprimer toutes les données relatives à un abonné qui n'a plus donné signe de vie depuis une longue période.

Enfin, l'invention permet de disposer d'une vue réelle des cartes actives sur le terrain, sans prendre en compte celles qui sont perdues, abîmées ou dont le détenteur a changé d'opérateur.

L'invention telle que décrite ci-dessus l'a été en référence aux dessins annexés et l'homme du métier imaginera aisément d'autres modes de mise en oeuvre sans pour autant sortir du cadre des revendications.

## Revendications

1. Procédé de mise à jour d'une base de données (30) d'abonnés enregistrés dans une plateforme OTA (12) reliée à un réseau de télécommunications (10), à chaque abonné étant associé un identifiant, **caractérisé en ce qu'**il consiste à :
i- transmettre de temps en temps (T3), depuis chaque terminal d'abonné à ladite plateforme OTA (12), un message comprenant l'identifiant d'abonné correspondant ;
ii- classer dans un premier répertoire (40) de ladite base de données (30) les identifiants d'abonnés ayant transmis au moins une fois à ladite plateforme OTA (12) ledit message depuis une première durée (T1) prédéterminée ;
iii- classer dans un second répertoire (41) de ladite base de données (30) les identifiants d'abonnés n'ayant pas transmis à ladite plateforme OTA (12) ledit message depuis ladite première durée (T1) prédéterminée ;
iv- n'envoyer, à partir de ladite plateforme OTA (12), des messages qu'aux abonnés classés dans ledit premier répertoire (40).

2. Procédé selon la revendication 1, **caractérisé en ce que** lesdits messages sont constitués par des mises à jour de programmes résidant dans lesdits terminaux d'abonnés.

3. Procédé selon la revendication 1, **caractérisé en ce que** lesdits messages sont constitués par des publicités.

4. Procédé selon l'une des revendications 1 à 3, **caractérisé en ce que** lesdits messages comprenant lesdits identifiants sont transmis à ladite plateforme (12) à la demande de ladite plateforme (12).

5. Procédé selon l'une des revendications 1 à 3, **caractérisé en ce que** lesdits messages comprenant lesdits identifiants sont transmis à ladite plateforme (12) à l'initiative desdits terminaux.

6. Procédé selon l'une des revendications 1 à 5, **caractérisé en ce qu'**au moins un desdits terminaux d'abonné renferme une carte de type UICC (11, 31-36) et **en ce que** lesdits messages transmis par ladite plateforme (12) sont envoyés à ladite carte de type UICC (11, 31-36).

7. Carte de type UICC (11, 31-36), **caractérisée en ce qu'**elle contient un programme générant périodiquement (T3) la transmission à une plateforme OTA (12) d'un message comprenant un identifiant de ladite carte UICC (11, 31-36).

8. Carte selon la revendication 7, **caractérisée en ce que** ledit programme génère la transmission dudit message comprenant ledit identifiant lors de la mise sous tension de ladite carte UICC (11, 31-36) si ledit programme détecte qu'une durée supérieure à une troisième durée (T3) prédéterminée s'est écoulée entre la dernière transmission dudit message comprenant ledit identifiant et ladite mise sous tension, ladite troisième durée prédéterminée (T3) étant inférieure à ladite première durée prédéterminée (T1).

9. Carte de type UICC, **caractérisée en ce qu'**elle contient un programme générant la transmission à une plateforme OTA (12) d'un message comprenant un identifiant de ladite carte UICC (11, 31-36), ladite transmission étant réalisée à réception d'un message d'interrogation émis par ladite plateforme OTA (12).

10. Plateforme OTA (12) comprenant des moyens de stockage (30) de données d'abonnés à un réseau de télécommunications (10), à chaque abonné étant associé un identifiant, **caractérisée en ce qu'**elle comprend des moyens pour empêcher la transmission de messages à des terminaux d'abonnés qui n'ont pas transmis leur identifiant à ladite plateforme OTA (12) depuis une première durée prédéterminée (T1).

11. Plateforme OTA (12) selon la revendication 10, **caractérisée en ce qu'**elle comprend des moyens pour supprimer les données des abonnés qui n'ont pas transmis un message comprenant leurs identifiants à ladite plateforme OTA (12) depuis une seconde durée prédéterminée (T2), ladite seconde durée prédéterminée (T2) étant supérieure ou égale à ladite première durée prédéterminée (T1).
